# EUROPEAN PATENT APPLICATION

(11) **EP 0 542 697 A1**
(43) Date of publication of application: **19.05.1993**
(21) Application number: 92830583.8
(22) Date of filing: 23.10.1992
(51) Int. Cl.: A01F 25/20

(54) **A movable door to be mounted on a loading side of a milling dessilator**

(30) Priority: 13.11.1991 IT VR910064 U
(71) Applicant: STORTI INTERNATIONAL S.r.l., I-37050 Belfiore d'Adige (Verona) (IT)
(72) Inventor: Storti, Ottorino, I-37050 Belfiore d'Adige (Verona) (IT)
(74) Representative: Sarpi, Maurizio

(57) **Abstract**

The present movable door (1) allows that the horizontal position of a milling dessilator be respected in order to assure a perfect weighing of the contents thereof and also to permit the forage fallen to the ground to be collected without the necessity of inclining the dessilator itself.

The door in question consists in general of a vertical plate (5) which may slide along edges (10) so as to be moved from a raised position when the dessilator is to be transported to a lowered position when the dessilator is to be used.

The plate (5) is moved by a gear which consists of levers (11) to be actuated with small pistons (14) or other equivalent shifting means which transmit their action also to a pair of shafts (16), the upper ends of the said shafts being apt to intercept bearing arms (3) supporting a milling cutter (4) so as to control and determine the minimum distance between the milling cutter itself and the plate (5).

## Description

The present patent relates to a movable door which is to be mounted on a loading side of a milling dessilator or the like and to the relative means for permitting the door itself to be lowered to the ground and the dessilator to be stabilized. At present, the known art provides machines for removing and mincing the ensiled forage, i.e. the so-called dessilators. A dessilator consists of a two-wheel car which is provided with a miller. In general, the miller has a cylinder which is provided with blades and is arranged on movable arms. Such a cylinder permits the ensiled forage to be drawn out and introduced in the inner part of the car itself in which the forage is also minced for instance by Archimedean screws or the like and finally, the minced forage is expelled out in the place of destination.

The operation of drawing, during which the forage is drawn out by the milling cutter, consists in scraping a forage face and drawing it out from the top to the bottom according to an arc of circle. In this way, the forage falls down and is at the same time convoyed in the inner part of the car owing to the speed and direction of rotation of the milling cutter.

However, the operator is obliged to incline the dessilator itself for permitting all the milled material, including the material fallen to the ground, to be introduced in the car. The rear loading side of the car is brought as near as possible to the ground with the inclination of the car. When the milling cutter has been lowered as much as possible, it can collect the fallen material and convoys the same in the inner part of the dessilator.

On the one hand, such an operation may not allow a complete gathering of the material and on the other hand, it causes an alteration in the weighing device which is used for weighing the assembled forage. In fact, the weighing elements are generally positioned near the wheels of the car and are efficient only when the car itself takes up a perfectly horizontal position. Otherwise, weighing errors may occur. Moreover, there is the possibility of drawing out a certain quantity of forage different from the determined quantity of forage.

The above mentioned inconveniences and other consequent ones are overcome by taking advantage of the present invention which consists of a simple device to be mounted on a loading side of a milling dessilator or the like, such a device being apt to extend the loading side of the car to the ground, to stabilize the car and to assure a perfect horizontal position of the car itself.

The immediate advantages of a device according to the present invention result from the fact that the horizontal position of the dessilator is maintained. In such a way, a perfect weighing of the forage is assured, after the latter has been milled and introduced in the car or dessilator. Moreover, also the forage, which has fallen to the ground and has amassed, is easily convoyed to the inner part of the dessilator. Moreover, another advantage consists in the fact that the proposed solution is practical. In fact, it makes a double use of the car possible, that is both for being transported on the road and used in the place of working owing to the fact that the milling cutter may be lowered to the ground or maintained in a raised position during the phase of transport.

Finally, an object of the present invention is to carry out less expensive, simpler milling dessilators than the known ones by using the aforesaid means since it is no more necessary to use those structures which were to be present in the inclinable dessilators.

The invention relates to a movable door to be mounted on a loading side of a milling dessilator or the like and means for lowering the door itself and stabilizing the dessilator, characterized in that for consisting of an essentially flat plate which is arranged vertically between vertical slide guides; the said plate comprising an inclined surface in the lower part and being movable vertically in both opposite directions by means of one or more levers which are controlled by at least one small piston or other similar shifting element; the said levers being also apt to control the movement of one or more shafts which permit the support and determine the lower position of supporting arms of the milling cutter in comparison with the position of the plate itself, of which arms the dessilator is generally provided.

The invention will be better understood from the following description and accompanying drawings wherein:-
Figure 1 shows a schematical side view of a movable door according to the invention, the door being raised and mounted on a milling dessilator;
Figure 2 shows a schematical view of the movable door after being lowered;
Figure 3 shows a detailed schematical perspective view of the movable door after being raised;
Figure 4 shows the same schematical view in Fig. 3 after the movable door has been lowered.

With reference to the accompanying drawings, number 1 indicates a movable door according to the invention as a whole to be mounted on a loading side of a milling dessilator 2 which is generally provided with swinging arms 3 holding a milling cylinder 4.

In general, the movable door 1 consists of a vertical plate 5 which comprises an upper projection 6 and a lower inclined plane 7. The latter is lowered to the ground so as to permit the forage fallen during the milling to be collected.

A small shoulder 8 is secured on both side ends of the upper projection 6 of the plate 5. Each small shoulder 8 comprises a pin or pivot 9 which is directed inwards and is provided with a seat permitting the pivot to insert and slide in edges 10.

The lower part of the plate 5 is hold by two levers 11. One end of each lever is pivoted to a small block 12 whereas the other end is connected with the lower part of the plate.

At least one of the levers 11 is intercepted at its centre line by a rod 13 of a piston 14 whose upper end is to be mounted on a supporting element 15.

Finally, two shafts 16 are mounted vertically in a part of the levers 11, that is near the coupling point of the rods 13, the upper end part of the shaft being hold by a ring clamp 17.

The shafts 16 are arranged in such a way that the upper ends thereof intercept the arms 3 supporting the milling cutter 4 so as to control the minimum distance between the cutter itself and the plate 5.

In fact, the lowering and raising of the plate 5, controlled by the piston 14 and the lever 11, provokes also a shifting of the shafts 16 acting as stroke ends for the milling cutter 4 so that the latter is prevented from lowering below the fixed limit. In such a way, it is not possible for the milling cutter 4 to touch the plate 5.

Now, we shall shortly describe an example of use of the device according to the present invention.

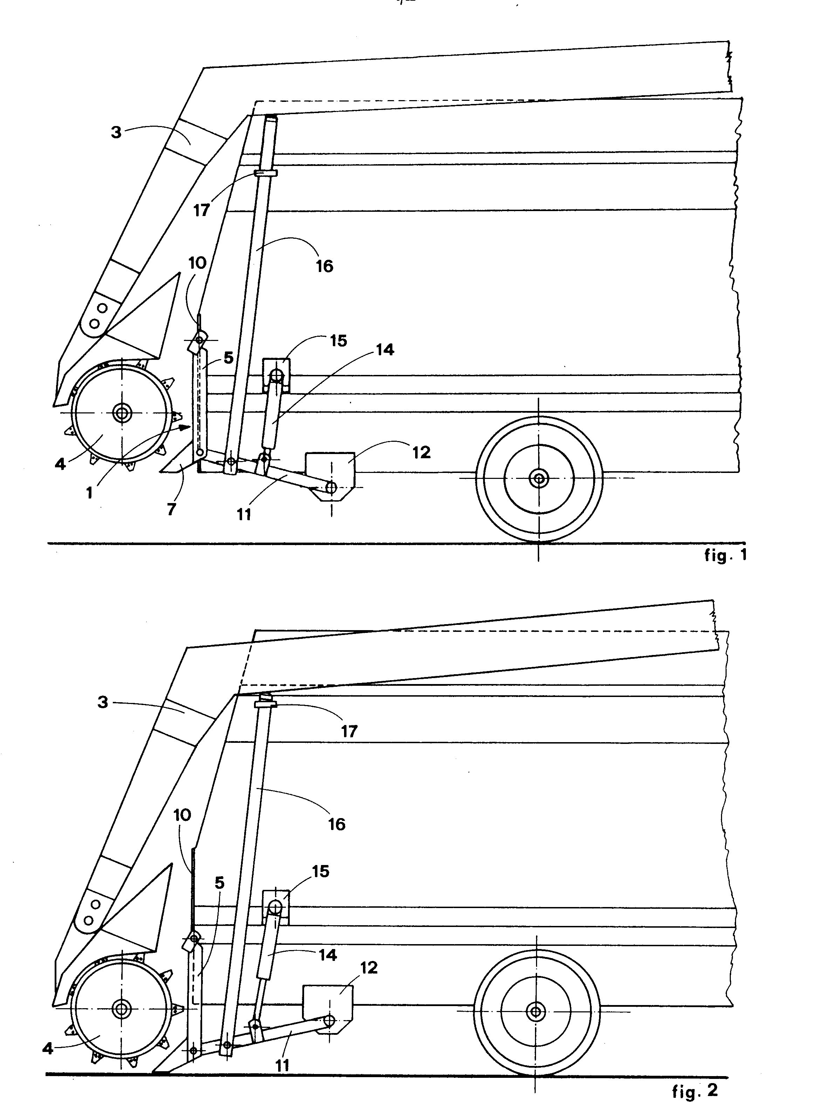

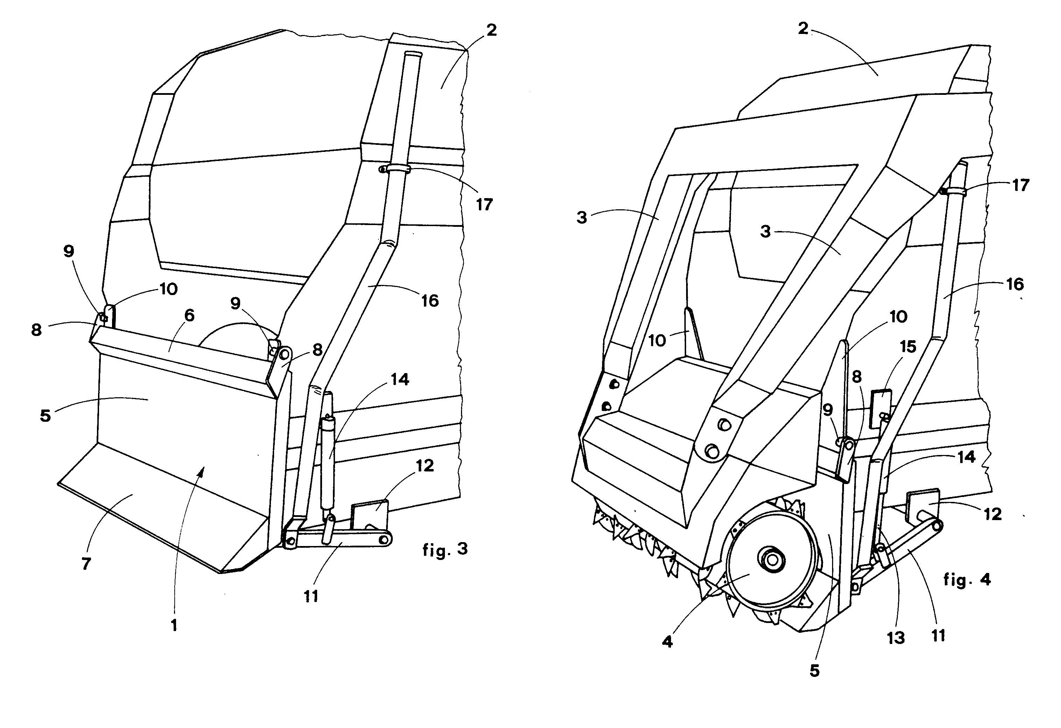

When the milling dessilator is transported, for instance it is hauled by a tractor, the parts permitting the lowering of the plate and the stability of the car are arranged as shown in Figures 1 and 3, that is in a completely raised position, the rod 13 being retracted and the shaft 16 and the plate 5 being raised.

When the place of working has been reached, the milling car or dessilator is to be disposed before the forage face with its loading side facing the forage face itself. Then, the horizontal position of the car is controlled and the lowering parts are actuated by means of the piston 14.

The thrust of the rod 13 of the piston causes the lowering of the levers 11 and the consequent lowering of the plate 15 which slides in the edges 10 downwards till the inclined plane 7 is near the ground but without touching it for not to alter the weighing elements.

Also the shaft 16 is lowered with this operation in order that its upper end determines the lowest point to be reached by the arms 3 and milling cutter 4.

Then, the forage is drawn out in the known manner, there being the advantage that the milling cutter may be lowered till skimming the ground, the distance of security from the plate 5 being always assured. In this way, it is possible to collect and introduce all the material in the dessilator where it is still minced before being expelled in the place of destination.

When the forage loading operation has been terminated, it is necessary to actuate the backing of the rod 13 of the piston in order to put the dessilator again in the condition of transport in which the plate and the relative parts are lifted.

As it can be seen, it is possible to bring the plate 5 near the ground and to follow any slopes of the ground itself, the position of the milling dessilator being always horizontal in order to obtain the aforesaid advantages.

## Claims

**1)** A movable door (1) for mounting on a loading side of a milling dessilator (2) or the like, and means permitting the door itself to be lowered and the milling dessilator to be stabilized, characterized in that for consisting of a plate (5) which is substantially flat and is arranged vertically between vertical slide guides (10);the said plate (5) being provided with an inclined plane or chute (7) in the lower part, the plate being moved vertically, in both opposite directions, by means of one or more levers (11) which are actuated by at least a small piston (14) or other similar shifting element; the said levers (11) being also apt to control the movement of one or more shafts (16) which determine the lowest position of supporting arms (3) in respect of the position of the plate, the said arms (3) being apt to support a milling cutter with which a milling dessilator is generally provided.

**2)** A movable door (1) as claimed in claim 1, characterized in that for consisting in general of a vertical plate (5) which is provided with an upper projection (6) and a lower inclined plane (7) which acts as a collecting element for collecting or taking up the forage which has fallen down during the milling.

**3)** A movable door (1) as claimed in the foregoing claims, characterized in that small shoulders (8) are secured on both side ends of the said upper projections(6) of the plate (5), each shoulder being provided with a guide or pivot (9) which is turned inwards and shows a seat which permits the pivot itself to insert and slide on edges (10) of the milling dessilator.

**4)** A movable door (1) as claimed in the foregoing claims, characterized in that a displacement of the said shafts (16) is also caused by the lowering or lifting of the plate (5), which shafts (16) act as stroke ends for the milling cutter (4) and prevent the cutter itself to lower below a fixed limit and to touch the plate.
